# EUROPÄISCHE PATENTSCHRIFT

(11) **EP 4 244 122 B1**
(45) Veröffentlichungstag und Bekanntmachung des Hinweises auf die Patenterteilung: **15.07.2026**
(21) Anmeldenummer: 21810939.5
(22) Anmeldetag: 09.11.2021
(51) Int. Cl.: B62D 15/02, B60Q 9/00

(54) **VERFAHREN ZUM BETREIBEN EINES PARKASSISTENZSYSTEMS, COMPUTERPROGRAMMPRODUKT, PARKASSISTENZSYSTEM UND FAHRZEUG**
METHOD FOR OPERATING A PARKING ASSISTANCE SYSTEM, COMPUTER PROGRAM PRODUCT, PARKING ASSISTANCE SYSTEM, AND VEHICLE
PROCÉDÉ D'EXPLOITATION D'UN SYSTÈME D'AIDE AU STATIONNEMENT, PRODUIT-PROGRAMME INFORMATIQUE, SYSTÈME D'AIDE AU STATIONNEMENT ET VÉHICULE

(30) Priorität: 11.11.2020 DE 102020129670
(43) Veröffentlichungstag der Anmeldung: 20.09.2023
(73) Patentinhaber: Valeo Schalter und Sensoren GmbH, 74321 Bietigheim-Bissingen (DE)
(72) Erfinder: JOOS, Malte, 74321 Bietigheim-Bissingen (DE)
(74) Vertreter: Jauregui Urbahn, Kristian
(86) Internationale Anmeldenummer: PCT/EP2021/081023
(87) Internationale Veröffentlichungsnummer: WO 2022/101160

(56) Entgegenhaltungen:
- EP-A2- 2 090 498
- DE-A1- 102011 086 440
- US-A1- 2013 166 190

## Beschreibung

Die vorliegende Erfindung betrifft ein Verfahren zum Betreiben eines Parkassistenzsystems, ein Computerprogrammprodukt, ein Parkassistenzsystem und ein Fahrzeug mit einem solchen Parkassistenzsystem.

Das Einparken eines Fahrzeugs erfolgt häufig unter Zuhilfenahme von Assistenzsystemen, die mittels einer Sensorik das Umfeld des Fahrzeugs erfassen. Bekannt sind hierbei insbesondere Systeme, die Ultraschallsensorik und/oder Kameras verwenden, um das Umfeld zu erfassen. Es sind Assistenzsysteme bekannt, die einen Einparkvorgang autonom durchführen können, wobei jedoch der Nutzer des Fahrzeugs den Einparkvorgang überwachen muss. Solche Systeme können als Level-2-System gemäß dem SAE-Klassifikationssystem klassifiziert werden. Das SAE-Klassifikationssystem wurde 2014 von SAE International, einer Standardisierungsorganisation für Kraftfahrzeuge, als J3016, "Taxonomy and Definitions for Terms Related to On-Road Motor Vehicle Automated Driving Systems" veröffentlicht. Ein Level-2-System zeichnet sich beispielsweise dadurch aus, der Nutzer des Fahrzeugs seine Aufmerksamkeit bei dem Fahrzeug und auf dem Straßenverkehr haben muss, so dass er jederzeit eingreifen kann oder die Kontrolle über das Fahrzeug übernehmen kann.

DE 10 2016 001 264 A1 offenbart ein Verfahren zum autonomen Fahren eines Fahrzeuges in einem begrenzten Gebiet, wobei ein fahrzeugeigenes, zum autonomen Fahren genutztes Steuergerät über eine Fahrzeugschnittstelle von einer externen Steuereinrichtung gesteuert wird.

US 9,688,288 B1 offenbart ein Verfahren, bei dem ein Fahrzeug in vorbestimmten Bereichen autonom mittels einer Steuereinheit betrieben wird. Wenn das Fahrzeug einen solchen vorbestimmten Bereich verlässt, wird der Fahrer angewiesen, die Kontrolle über das Fahrzeug wieder zu übernehmen.

Die EP 2 090 498 A2 zeigt ein Verfahren zum Betrieb eines Fahrassistenzsystems beim Einparken eines Fahrzeugs in eine seitliche Parklücke, wobei zunächst eine Parklücke vermessen wird, indem der Abstand zu der Parklücke längs sowie seitlich begrenzenden Objekten erfasst wird. Anschließend wird eine Einparktrajektorie mit einer Endposition des Fahrzeugs in der Parklücke berechnet und dann das Fahrzeug in die Endposition gesteuert. EP 2 090 498 A2 offenbart insbesondere ein Verfahren zum Betreiben eines Parkassistenzsystems für ein Fahrzeug, das Verfahren umfassend:
a) Starten eines Einparkvorgangs, um das Fahrzeug auf einem Parallel-Parkplatz zu parken;
b) teil-autonomes Durchführen eines ersten Zuges des Einparkvorgangs unter Überwachung des Fahrzeugs durch einen Nutzer,
c) Empfangen von Umgebungssensordaten von wenigstens einem Umgebungssensor des Fahrzeugs während des ersten Zuges,
d) Ermitteln, ob das Fahrzeug nach Abschluss des ersten Zuges in einem vorbestimmten Zustand ist.

Die US 2013/166190 A1 und DE 10 2011 086440 A1 zeigen weitere Verfahren zum Betrieb eines Fahrerassistenzsystems.

Vor diesem Hintergrund besteht eine Aufgabe der vorliegenden Erfindung darin, den Betrieb eines Parkassistenzsystems zu verbessern.

Gemäß einem ersten Aspekt wird ein Verfahren zum Betreiben eines Parkassistenzsystems für ein Fahrzeug vorgeschlagen. In einem ersten Schritt a) wird ein Einparkvorgang gestartet, um das Fahrzeug auf einem Parallel-Parkplatz zu parken. In einem zweiten Schritt b) wird ein erster Zug des Einparkvorgangs teil-autonom unter Überwachung des Fahrzeugs (100) durch einen Nutzer (105) durchgeführt. In einem dritten Schritt c) werden Umgebungssensordaten von wenigstens einem Umgebungssensor des Fahrzeugs während des ersten Zuges empfangen. In einem vierten Schritt d) wird ermittelt, ob sich das Fahrzeug nach Abschluss des ersten Zuges in einem vorbestimmten Zustand befindet. In einem fünften Schritt e) wird eine voll-autonome Durchführung weiterer Züge des Einparkvorgangs in Abhängigkeit des ermittelten vorbestimmten Zustands veranlasst.

Dieses Verfahren weist den Vorteil auf, dass der Einparkvorgang zumindest teilweise autonom durch das Fahrzeug durchführbar ist. Dies wird erreicht, indem zuvor sichergestellt wird, dass das Fahrzeug in einem vorbestimmten Zustand ist, der das sichere Ausführen von autonomen Zügen mit dem Fahrzeug ohne eine Gefährdung erlaubt.

Die Schritte a) und b) können sowohl manuell durch einen Nutzer des Fahrzeugs als mit Unterstützung des Parkassistenzsystems, insbesondere auch teil-autonom, durchgeführt werden. Der erste Zug des Einparkvorgangs umfasst beispielsweise ein Eintauchen des Fahrzeugs auf dem Parallel-Parkplatz. Das heißt, dass sich das Fahrzeug nach dem ersten Zug beispielsweise vollständig auf einer als Parkbereich ausgezeichneten Fläche befindet. Ein "Zug" des Einparkvorgangs umfasst beispielsweise eine Fahrt entlang einer Trajektorie in eine Fahrtrichtung. Wenn die Fahrtrichtung geändert wird, ist der aktuelle Zug beendet und der folgende Zug kann beginnen.

Ein Parallel-Parkplatz bezeichnet beispielsweise einen Parkplatz, der parallel zu einer Fahrtrichtung eine Straße ausgerichtet ist. Häufig sind Parkbereiche mit Parallel-Parkplätzen längs einer öffentlichen Straße angeordnet.

Während der Durchführung des ersten Zuges werden Umgebungssensordaten von wenigstens einem Umgebungssensor des Fahrzeugs empfangen. Beispielsweise umfasst das Fahrzeug Ultraschallsensoren, Kameras, ein Radar, ein Lidar und dergleichen mehr, mit denen es die Umgebung erfasst. Auf Basis der Umgebungssensordaten lassen sich Objekte, Strukturen, Hindernisse und dergleichen, die sich in der Umgebung des Fahrzeugs befinden, erfassen. Die während dem ersten Zug des Fahrzeugs erfassten Umgebungssensordaten sind insbesondere indikativ für den Parallel-Parkplatz, auf dem das Fahrzeug einparkt. Das heißt, dass sich auf Basis dieser Daten insbesondere Eigenschaften oder Merkmale des Parallel-Parkplatzes ableiten lassen, wie eine Länge, eine Breite, eine Art der Begrenzung der Parallel-Parkplatzes und dergleichen mehr.

Der vorbestimmte Zustand des Fahrzeugs, der in Schritt d) ermittelt wird, kann mehrere Kriterien umfassen, die erfüllt sein müssen, damit das Fahrzeug in dem vorbestimmten Zustand ist. Diese Kriterien dienen dazu, abzusichern, dass eine autonome Durchführung weiterer Züge des Einparkvorgangs sicher und ohne Gefährdung des Fahrzeugs und/oder anderer Verkehrsteilnehmer möglich ist.

In Ausführungsformen kann vorgesehen sein, dass, wenn nach dem ersten Zug des Einparkvorgangs der vorbestimmte Zustand nicht vorliegt, ein weiterer Zug oder auch mehrere weitere Züge des Einparkvorgangs manuell, mit Unterstützung und/oder teil-autonom durchgeführt werden. Nach jedem weiteren Zug kann dabei ermittelt werden, ob der vorbestimmte Zustand vorliegt oder nicht, und dementsprechend kann Schritt e) ausgeführt werden.

In dem Schritt e) veranlasst das Parkassistenzsystem eine voll-autonome Durchführung weitere Züge des Einparkvorgangs, sofern der vorbestimmte Zustand in Schritt d) ermittelt wurde. Dabei wird insbesondere fortlaufend überwacht, dass der vorbestimmte Zustand des Fahrzeugs erhalten bleibt.

Unter einer "voll-autonomen Durchführung weiterer Züge" wird vorliegend verstanden, dass das Parkassistenzsystem als ein Level-4-System gemäß dem SAE-Klassifikationssystem agiert. Das SAE-Klassifikationssystem wurde 2014 von SAE International, einer Standardisierungsorganisation für Kraftfahrzeuge, als J3016, "Taxonomy and Definitions for Terms Related to On-Road Motor Vehicle Automated Driving Systems" veröffentlicht. Ein Level-4-System zeichnet sich beispielsweise dadurch aus, dass der Nutzer des Fahrzeugs dieses nicht zu überwachen braucht. Das heißt, dass der Nutzer das Fahrzeug unbeaufsichtigt die entsprechende Funktion ausführen lassen kann.

Die weiteren Züge umfassen beispielsweise ein Korrigieren einer Ausrichtung des Fahrzeugs auf dem Parallel-Parkplatz, in Bezug auf eine oder mehrere Begrenzungen des Parallel-Parkplatzes.

Darunter, dass das Parkassistenzsystem die Durchführung "veranlasst" wird beispielsweise verstanden, dass das Parkassistenzsystem einen Steuerbefehl an eine oder mehrere andere Einheiten des Fahrzeugs, wie eine Steuerungsvorrichtung des Fahrzeugs oder dergleichen, ausgibt. In Ausführungsformen kann das Parkassistenzsystem dazu eingerichtet sein, eine Antriebseinheit, eine Lenkeinheit und dergleichen mehr direkt anzusteuern und damit das Fahrzeug zu führen. In diesem Fall kann man sagen, dass das Parkassistenzsystem die weiteren Züge des Einparkvorgangs autonom durchführt.

Gemäß einer Ausführungsform des Verfahrens umfasst der Schritt a) ein Empfangen einer Nutzereingabe eines Nutzers des Fahrzeugs, und ein Veranlassen einer Durchführung des Einparkvorgangs durch das Parkassistenzsystem.

Die Nutzereingabe kann beispielsweise über ein entsprechendes Mensch-Maschine-Bedienfeld (HMI, von engl. "human-machine-interface") des Fahrzeugs und/oder von einer externen Einrichtung, wie beispielsweise ein Mobilgerät des Nutzers und/oder einem Fahrzeugschlüssel, empfangen werden. Die Nutzereingabe umfasst insbesondere die Information, dass das Fahrzeug auf einem Parallel-Parkplatz geparkt werden soll. In Ausführungsformen kann die Nutzereingabe ferner eine Auswahl eines Parallel-Parkplatzes einer Mehrzahl möglicher Parallel-Parkplätze umfassen.

Gemäß einer weiteren Ausführungsform des Verfahrens wird der Schritt b) teil-autonom von dem Parkassistenzsystem unter Überwachung des Fahrzeugs durch den Nutzer durchgeführt.

Beispielsweise ist das Parkassistenzsystem zur teil-autonomen Durchführung des ersten Zuges des Einparkvorgangs eingerichtet. Beispielsweise weist das Parkassistenzsystem oder eine andere Einheit des Fahrzeugs diesbezüglich eine Level-2-System Funktionalität auf. Das heißt, dass das Fahrzeug durch das Parkassistenzsystem oder die andere Einheit das Fahrzeug führen, aber der Nutzer des Fahrzeugs überwacht die Bewegungen des Fahrzeugs. Damit ist sichergestellt, dass der Nutzer jederzeit in das Geschehen eingreifen kann, beispielsweise wenn sich eine Gefährdung ergibt.

Gemäß einer weiteren Ausführungsform des Verfahrens umfasst der Schritt b) ferner ein Empfangen eines für eine aktuelle Position des Nutzers relativ zu dem Fahrzeug indikativen Sensorsignals.

In dieser Ausführungsform kann sichergestellt werden, dass der Nutzer sich während der Durchführung des ersten Zuges des Einparkvorgangs innerhalb eines vorbestimmten maximalen Abstands zu dem Fahrzeug befindet. Das Sensorsignal kann beispielsweise von einem Fahrzeugschlüssel oder von einem Mobilgerät des Nutzers, welche der Nutzer bei sich führt, empfangen werden. Zusätzlich oder alternativ kann vorgesehen sein, dass der Nutzer durch eine Bildanalyse auf Bildern, die von einer Umgebungskamera des Fahrzeugs erfasst werden, ermittelt wird.

Wenn der Nutzer einen vorbestimmten maximalen Abstand zu dem Fahrzeug überschreitet, kann der Einparkvorgang beispielsweise abgebrochen werden, indem das Fahrzeug mit einer Notbremsung zum Stillstand gebracht wird.

Erfindungsgemäß umfasst der Schritt b) ferner ein Empfangen eines Sensorsignals eines durch den Nutzer des Fahrzeugs bedienten Totmannschalters.

Hierdurch kann die Sicherheit bei der Durchführung des ersten Zuges erhöht werden. Der Totmannschalter kann eine Applikation, die auf einem Mobilgerät des Nutzers läuft, als auch eine separate Einrichtung, insbesondere auf dem Fahrzeugschlüssel integriert, umfassen. Solange der Nutzer den Totmannschalter betätigt, wird der erste Zug des Einparkvorgangs ausgeführt. Wenn der Totmannschalter losgelassen wird, wird der erste Zug des Einparkvorgangs abgebrochen.

Diese Ausführungsform ermöglicht es, dass der Nutzer noch vor dem ersten Zug das Fahrzeug verlässt. Während des ersten Zuges bleibt der Nutzer in der Nähe und überwacht die Durchführung des ersten Zuges, was durch das Sensorsignal des Totmannschalters bestätigt wird. Nach dem ersten Zug und wenn sich das Fahrzeug in dem vorbestimmten Zustand befindet, kann der Nutzer sich abwenden, da das Fahrzeug die weiteren Züge autonom durchführt.

In Ausführungsformen ist vorgesehen, dass der Nutzer die autonome Durchführung von weiteren Zügen bestätigt, beispielsweise indem er eine entsprechende Eingabe and dem HMI, einem Mobilgerät und oder dem Fahrzeugschlüssel oder dergleichen vornimmt.

Gemäß einer weiteren Ausführungsform des Verfahrens umfasst der Schritt d) ein Ermitteln, ob sich das Fahrzeug vollständig auf einer als Parkbereich des Parallel-Parkplatzes gekennzeichneten Fläche befindet.

Dieses Merkmal ist ein Beispiel für ein Kriterium zum Bestimmen des vorbestimmten Zustands des Fahrzeugs.

Der Parkbereich ist beispielsweise durch Markierungen, wie Linien oder dergleichen, gekennzeichnet. Dies kann insbesondere durch eine Auswertung von Kamerabildern, die von einer oder mehreren Umgebungskameras erfasst wurden, ermittelt werden. Zudem kann auf Basis der aktuellen Fahrzeugposition, die beispielswiese mittels eines satellitengestützten Systems ermittelt wird, und einer digitalen Karte ermittelt werden, ob die Bedingung erfüllt ist.

Gemäß einer weiteren Ausführungsform des Verfahrens umfasst der Schritt d) ein Ermitteln, ob auf dem Parallel-Parkplatz keine beweglichen Hindernisse, insbesondere Personen, anwesend sind.

Dieses Merkmal ist ein weiteres Beispiel für ein Kriterium zum Bestimmen des vorbestimmten Zustands des Fahrzeugs.

Gemäß einer weiteren Ausführungsform des Verfahrens umfasst der Schritt d) umfasst ein Ermitteln, ob der Parallel-Parkplatz eine eindeutige Begrenzung aufweist.

Dieses Merkmal ist ein weiteres Beispiel für ein Kriterium zum Bestimmen des vorbestimmten Zustands des Fahrzeugs.

Unter einer "eindeutigen Begrenzung" wird vorliegend beispielsweise verstanden, dass Markierungen den Parallel-Parkplatz eindeutig festlegen. Dies ist beispielsweise gegeben, wenn der Parallel-Parkplatz zumindest vorne oder hinten und auf einer Seite eine Begrenzung aufweist, da dann die Parkposition des Fahrzeugs sowohl in Quer- als auch in Längsrichtung an der jeweiligen Begrenzung ausrichtbar und damit eindeutig festgelegt ist.

Häufig sind Parkbereiche mit Parallel-Parkplätzen längs einer öffentlichen Straße angeordnet, wobei der Parkbereich nur seitlich durch Linien und/oder Bordsteine begrenzt ist, in Längsrichtung aber keine Unterteilung aufweist. In diesem Fall kann beispielsweise ein anderes geparktes Fahrzeug und/oder der Anfang oder das Ende des Parkbereichs als eine eindeutige Begrenzung in Längsrichtung dienen.

Gemäß einer weiteren Ausführungsform des Verfahrens umfasst der Schritt d) ein Durchführen einer Fehlerabfrage aller Teilsysteme des Fahrzeugs und/oder des Parkassistenzsystems, die an dem Schritt e) beteiligt sind.

Dieses Merkmal ist ein weiteres Beispiel für ein Kriterium zum Bestimmen des vorbestimmten Zustands des Fahrzeugs.

Die Teilsysteme umfassen insbesondere die Umgebungssensoren des Fahrzeugs, deren Umgebungssensordaten zum Ermitteln des vorbestimmten Zustands und oder zur autonomen Durchführung der weiteren Züge verarbeitet werden, wie Ultraschallsensoren, Radar, Lidar, Kameras und dergleichen mehr, das Antriebs- und Bremssystem des Fahrzeugs inklusive von Raddrehzahlsensoren, das Lenkungssystem des Fahrzeugs inklusive von Radwinkelsensoren, sowie Steuer- und Regelungseinheiten, die die jeweiligen Einheiten des Fahrzeugs regeln und/oder steuern.

Gemäß einer weiteren Ausführungsform des Verfahrens umfasst der Schritt d) ein Ermitteln einer Trajektorie umfassend die weiteren Züge des Einparkvorgangs, und ein Überprüfen, ob das Fahrzeug bei dem autonomen Fahren entlang der ermittelten Trajektorie vollständig innerhalb einer als Parkbereich des Parallel-Parkplatzes gekennzeichneten Fläche bleibt.

Dieses Merkmal ist ein weiteres Beispiel für ein Kriterium zum Bestimmen des vorbestimmten Zustands des Fahrzeugs.

Damit kann sichergestellt werden, dass kein Element des Fahrzeugs während der autonomen Durchführung der weiteren Züge des Einparkvorgangs auf eine Fahrbahn einer öffentlichen Straße hinausragt.

Gemäß einer weiteren Ausführungsform des Verfahrens umfasst dieses ein Abbrechen des Schritts e), falls das Fahrzeug den Parkbereich des Parallel-Parkplatzes zumindest teilweise verlässt, und ein Ausgeben eines Hinweissignals an den Nutzer des Fahrzeugs, dass der Einparkvorgang abgebrochen wurde.

Man kann auch sagen, dass der Schritt e) abgebrochen wird, sobald der vorbestimmte Zustand des Fahrzeugs nicht mehr vorliegt.

Gemäß einer weiteren Ausführungsform des Verfahrens umfasst das Abbrechen eine Notbremsung des Fahrzeugs, um das Fahrzeug in einen sicheren Zustand zu versetzen.

In dem sicheren Zustand des Fahrzeugs stellt das Fahrzeug insbesondere keine Gefahr für seine Umwelt dar.

Gemäß einem zweiten Aspekt wird ein Computerprogrammprodukt vorgeschlagen, welches Befehle umfasst, die bei der Ausführung des Programms durch einen Computer diesen veranlassen, das Verfahren gemäß dem ersten Aspekt auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein Parkassistenzsystems für ein Fahrzeug vorgeschlagen, umfassend:
eine Empfangseinheit zum Empfangen von Umgebungssensordaten von wenigstens einem Umgebungssensor des Fahrzeugs während eines ersten teil-autonomen Zuges eines Einparkvorgangs des Fahrzeugs auf einen Parallel-Parkplatz,
eine Ermittlungseinheit zum Ermitteln, ob das Fahrzeug nach Abschluss des ersten Zuges in einem vorbestimmten Zustand ist, und
eine Veranlassungseinheit zum Veranlassen einer voll-autonomen Durchführung von weiteren Zügen des Einparkvorgangs in Abhängigkeit des ermittelten vorbestimmten Zustands.

Die für das vorgeschlagene Verfahren beschriebenen Ausführungsformen und Merkmale gelten für das vorgeschlagene Parkassistenzsystem entsprechend. Die Vorteile, die zu dem Verfahren vorgetragen wurden, gelten für das Parkassistenzsystem entsprechend.

Die jeweilige Einheit, beispielsweise die Empfangseinheit, die Ermittlungseinheit und/oder die Veranlassungseinheit, kann hardwaretechnisch und/oder softwaretechnisch implementiert sein. Bei einer hardwaretechnischen Implementierung kann die jeweilige Einheit zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als ein Algorithmus, als Teil eines Programmcodes oder als ausführbares Objekt ausgebildet sein. Ferner kann jede der vorliegend genannten Einheiten auch als Teil eines übergeordneten Steuerungssystems des Fahrzeugs, wie beispielsweise einer zentralen elektronischen Steuereinrichtung und/oder einem Motorsteuergerät (ECU: Engine Control Unit), ausgebildet sein.

Gemäß einem weiteren Aspekt wird ein Fahrzeug mit wenigstens einem Umgebungssensor zum Erfassen und Ausgeben von Umgebungssensordaten und mit einem Parkassistenzsystem gemäß dem dritten Aspekt vorgeschlagen.

Das Fahrzeug ist beispielsweise ein Personenkraftwagen oder auch ein Lastkraftwagen. Das Fahrzeug umfasst vorzugsweise eine Anzahl an Umgebungssensoren, die zum Erfassen einer Umgebung des Fahrzeugs eingerichtet sind. Beispiele für derartige Sensoreinheiten des Fahrzeugs sind Bildaufnahmeeinrichtungen, wie eine Kamera, ein Radar (engl. radio detection and ranging) oder auch ein Lidar (engl. light detection and ranging), Ultraschallsensoren. Zusätzlich kann das Fahrzeug weitere Sensoreinheiten, die zum Erfassen des Fahrzustands des Fahrzeugs, wie Ortungssensoren, Radwinkelsensoren und/oder Raddrehzahlsensoren, umfassen. Die Umgebungssensoren und die Sensoreinheiten sind jeweils zum Ausgeben eines Sensorsignals eingerichtet, insbesondere an das Parkassistenzsystem.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische Ansicht eines Fahrzeugs aus einer Vogelperspektive;
- Fig. 2: zeigt in drei Abbildungen schematisch einen Ablauf eines Einparkvorgangs auf einen Parallel-Parkplatz;
- Fig. 3: zeigt in zwei Abbildungen schematisch einen weiteren Ablauf eines Einparkvorgangs auf einen Parallel-Parkplatz;
- Fig. 4: zeigt ein schematisches Blockschaltbild eines Ausführungsbeispiels für ein Parkassistenzsystem; und
- Fig. 5: zeigt ein schematische Blockdiagramm eines Ausführungsbeispiels eines Verfahrens zum Betreiben eines Parkassistenzsystems.

In den Figuren sind gleiche oder funktionsgleiche Elemente mit denselben Bezugszeichen versehen worden, sofern nichts anderes angegeben ist.

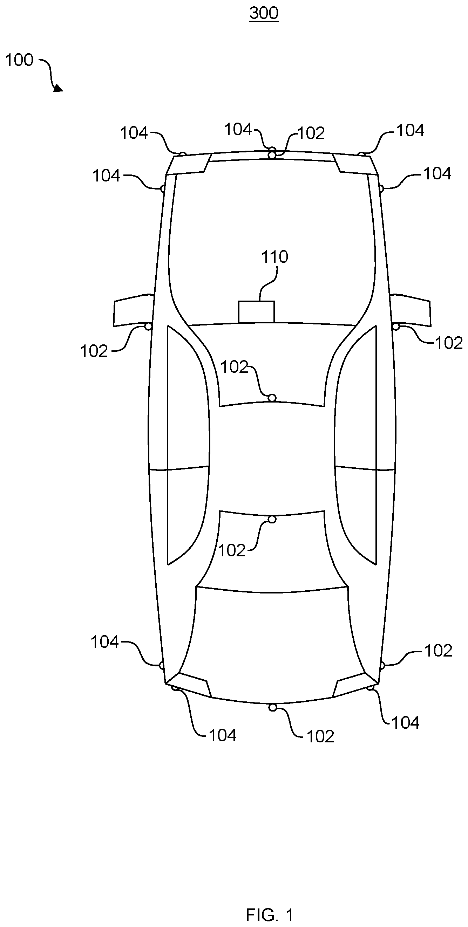

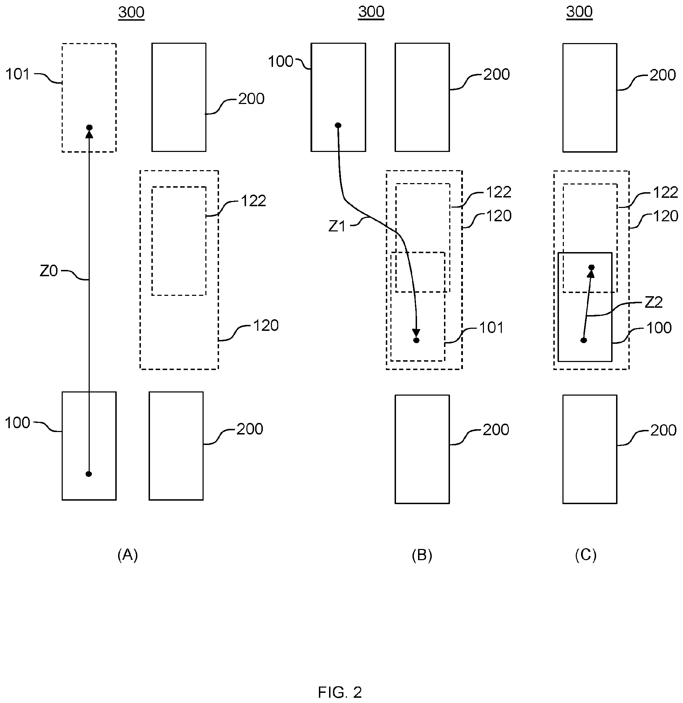

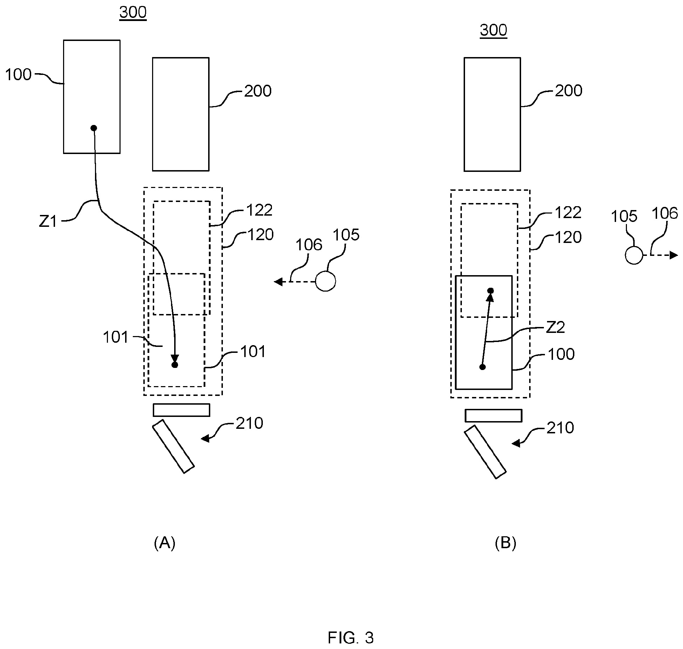

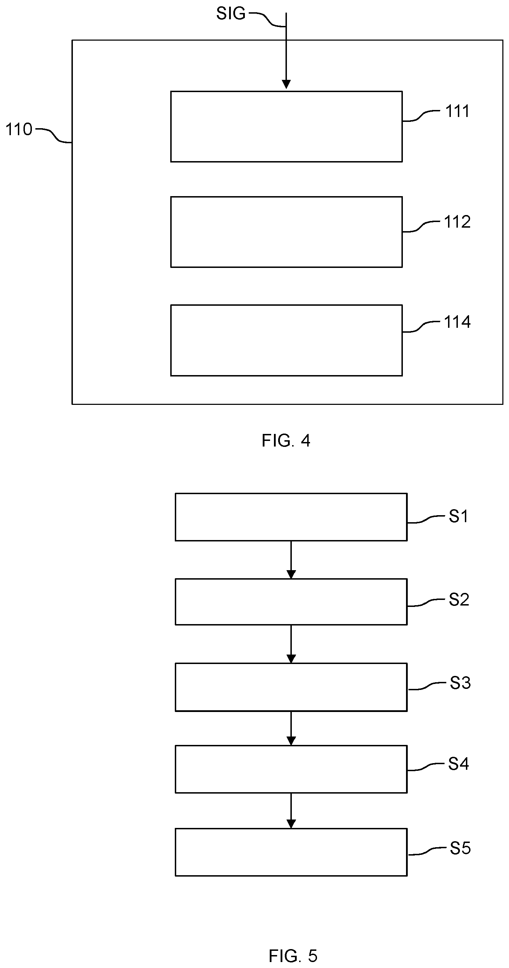

Fig. 1 zeigt eine schematische Ansicht eines Fahrzeugs 100 aus einer Vogelperspektive. Das Fahrzeug 100 ist beispielsweise ein Auto, das in einer Umgebung 300 angeordnet ist. Das Auto 100 weist ein Parkassistenzsystem 110 auf, das beispielsweise als ein Steuergerät ausgebildet ist. Das Parkassistenzsystem 100 ist beispielsweise wie anhand der Fig. 4 näher erläutert ausgebildet und ist dazu eingerichtet, ein Einparkvorgang wie anhand der Fig. 2 oder der Fig. 3 näher erläutert durchzuführen.

Zudem sind an dem Auto 100 eine Mehrzahl an Umgebungssensoreinrichtungen 102, 104 angeordnet, wobei es sich beispielhaft um optische Sensoren 102 und Ultraschallsensoren 104 handelt. Die optischen Sensoren 102 umfassen beispielsweise visuelle Kameras, ein Radar und/oder ein Lidar. Die optischen Sensoren 102 können jeweils ein Bild eines jeweiligen Bereichs aus der Umgebung 300 des Autos 100 erfassen und als optisches Sensorsignal ausgeben. Die Ultraschallsensoren 104 sind zum Erfassen eines Abstands zu in der Umgebung 300 angeordneten Objekten und zum Ausgeben eines entsprechenden Sensorsignals eingerichtet. Mittels den von den Umgebungssensoreinrichtungen 102, 104 erfassten Sensorsignalen ist das Parkassistenzsystem 110 in der Lage, das Auto 100 teilautonom oder auch vollautonom zu fahren. Außer den in der Fig. 1 dargestellten optischen Sensoren 102 und Ultraschallsensoren 104 kann vorgesehen sein, dass das Fahrzeug 100 verschiedene weitere Sensoreinrichtungen aufweist. Beispiele hierfür sind ein Mikrofon, ein Beschleunigungssensor, eine Antenne mit gekoppeltem Empfänger zum Empfangen von elektromagnetisch übertragbarer Datensignale, ein Raddrehzahlsensor, ein Radwinkelsensor, ein Ortungssensor und dergleichen mehr.

Fig. 2 zeigt in drei Abbildungen (A) - (C) schematisch einen Ablauf eines Einparkvorgangs auf einen Parallel-Parkplatz 122. Der Parallel-Parkplatz 122 befindet sich in einem freien Parkbereich 120, der beispielsweise seitlich parallel zu einer öffentlichen Straße angeordnet ist. Der freie Parkbereich 120 ist in diesem Beispiel durch jeweils ein geparktes Fahrzeug 200 vorne und hinten begrenzt. Der Einparkvorgang wird beispielsweise mit dem Fahrzeug 100 der Fig. 1 durchgeführt.

In der ersten Abbildung (A) befindet sich das Fahrzeug 100 noch auf der Fahrbahn der Straße. Der Nutzer 105 (siehe Fig. 3) des Fahrzeugs 100 hat den Wunsch, das Fahrzeug 100 auf dem Parallel-Parkplatz 122 zu parken. Zunächst fährt er an dem freien Parkbereich 120 mit dem Parallel-Parkplatz 122 in einem vorbereitenden Zug Z0 vorbei, um die Endposition 101 zu erreichen. Der Zug Z0 ist hierbei durch eine Trajektorie dargestellt, die sich beispielsweise auf einen Mittelpunkt der Hinterachse des Fahrzeugs bezieht. In Ausführungsformen kann der Zug Z0 bereits durch das Parkassistenzsystem 110 (siehe Fig. 1 oder 4) durchgeführt werden, wenigstens teilweise. Insbesondere können während des Zuges Z0 bereits Umgebungssensordaten SIG (siehe Fig. 4) empfangen werden, um den freien Parkbereich 120 und die geparkten Fahrzeuge 200 zu erfassen. Auf Basis der Umgebungssensordaten SIG kann beispielsweise ermittelt werden, ob der freie Parkbereich 120 groß genug ist, damit das Fahrzeug 100 auf dem Parallel-Parkplatz 122 geparkt werden kann, und ob der freie Parkbereich 120, der zumindest teilweise auch als Rangier-Bereich während des Einparkvorgangs genutzt wird, frei von Hindernissen, insbesondere frei von Lebewesen, ist.

In der Abbildung (B) ist der erste Zug Z1 des Einparkvorgangs dargestellt. Der Nutzer 105, oder, in Ausführungsformen, das Parkassistenzsystem 110, legt hierbei den Rückwärtsgang ein und setzt das Fahrzeug 100 rückwärts-seitlich zurück, so dass das Fahrzeug 100 in den freien Parkbereich 120 eintaucht. In der Endposition 101 ist das Fahrzeug 100 dann vollständig in dem freien Parkbereich 120 eingetaucht.

Während des ersten Zuges Z1 wird die Umgebung durch die Umgebungssensoren 102, 104 (siehe Fig. 1) weiterhin erfasst. Auf Basis der empfangenen Umgebungssensordaten SIG wird ermittelt, ob das Fahrzeug 100, wenn es die Endposition 101 erreicht hat, in einem vorbestimmten Zustand ist. Beispielsweise wird anhand der Umgebungssensordaten SIG überprüft, ob das Fahrzeug 100 vollständig in den Parkbereich 120 eingetaucht ist, also ob kein Element des Fahrzeugs 100 mehr auf die Fahrbahn der Straße hinausragt. Weiterhin kann überprüft werden, ob der Parkbereich 120 und/oder der Parallel-Parkplatz 122 eindeutig begrenzt ist, beispielsweise durch Markierungen, Linien, einen Bordstein und/oder durch ein Hindernis, wie ein anderes geparktes Fahrzeug 200. Zusätzlich kann überprüft werden, dass sich keine Lebewesen in unmittelbarer Nähe des Fahrzeugs 100 und/oder in dem Parkbereich 120 befinden. Beispielsweise kann ein Mindestabstand aus einem Bereich von 0,5 - 2 Meter, vorzugsweise 0,75 - 1,5 Meter, vorgegeben sein, den ein Lebewesen zu dem Fahrzeug 100 einhalten muss. Weiterhin kann eine Funktionsprüfung aller Systeme, die an einem autonomen Parkmanöver beteiligt sind, durchgeführt werden. Zudem kann eine Trajektorie ermittelt werden, die das Fahrzeug 100 in dem auszuführenden autonomen Parkmanöver zurücklegen wird, wobei in Abhängigkeit der ermittelten Trajektorie ermittelt wird, ob das Fahrzeug 100 während des gesamten autonomen Parkmanövers vollständig in dem Parkbereich 120 eingetaucht bleibt.

Wenn der vorbestimmte Zustand vorliegt, kann das Parkassistenzsystem 110 die autonome Durchführung von weiteren Zügen Z2 veranlassen. Der vorbestimmte Zustand kann, muss aber nicht alle vorgenannten Kriterien umfassen. Zudem kann der vorbestimmte Zustand weitere Kriterien umfassen, die hier nicht explizit genannt sind, sofern diese zu einem sicheren Betrieb des Fahrzeugs 100 in dem autonomen Fahrmodus beitragen können.

Die Abbildung (C) zeigt die autonome Durchführung von weiteren Zügen Z2, da das Vorliegen des vorbestimmten Zustands des Fahrzeugs 100 nach dem ersten Zug Z1 ermittelt wurde. In diesem Beispiel ist die autonome Durchführung auf lediglich einen weiteren Zug Z2 beschränkt, dies ist jedoch nur beispielhaft zu verstehen. In weiteren Ausführungsformen kann eine Mehrzahl an weiteren Zügen Z2 vorgesehen sein, beispielsweise kann das Fahrzeug 100 dabei mehrfach vor- und zurückgesetzt (rangiert) werden, um eine Ausrichtung des Fahrzeugs 100 exakt parallel und/oder mit einem genau vorgegebenen Abstand zu einer Begrenzung des Parallel-Parkplatzes 122 vorzunehmen.

Fig. 3 zeigt in zwei Abbildungen einen weiteren schematischen Ablauf eines Einparkvorgangs auf einen Parallel-Parkplatz 122. Der Parallel-Parkplatz 122 befindet sich in einem freien Parkbereich 120, der beispielsweise seitlich parallel zu einer öffentlichen Straße angeordnet ist. Der freie Parkbereich 120 ist in diesem Beispiel durch ein geparktes Fahrzeug 200 vorne begrenzt. Nach hinten ist eine Grenze des freien Parkbereichs 120 durch eine Markierung 210 auf der Straße gekennzeichnet. Der Einparkvorgang wird beispielsweise mit dem Fahrzeug 100 der Fig. 1 durchgeführt.

Die Abbildung (A) zeigt den ersten Zug Z1 des Einparkvorgangs. Gegenüber der Fig. 2 ist in diesem Beispiel der Nutzer 105 bereits aus dem Fahrzeug 100 ausgestiegen und befindet sich seitlich neben dem freien Parkbereich 120 und dem Parallel-Parkplatz 122. Das Parkassistenzsystem 110 (siehe Fig. 1 oder 4) des Fahrzeugs 100 führt daher auch den ersten Zug Z1 des Einparkvorgangs im Wesentlichen autonom durch, allerdings unter der ständigen Überwachung durch den Nutzer 105. Dies ist durch die Aufmerksamkeit 106 des Nutzers 105 sichergestellt, die in Richtung des Fahrzeugs 100 weist. Beispielsweise hat der Nutzer 105 noch vor dem Aussteigen den Einparkvorgang durch eine entsprechende Eingabe auf einem HMI des Fahrzeugs 100 gestartet, wobei er insbesondere den Parallel-Parkplatz 122, auf dem das Fahrzeug 100 geparkt werden soll, ausgewählt hat. Der Nutzer 105 betätigt von außerhalb des Fahrzeugs 100 beispielsweise einen Totmannschalter (nicht dargestellt), der in dem Fahrzeugschlüssel integriert sein kann. Das Parkassistenzsystem 110 empfängt beispielsweise ein Signal von dem Totmannschalter, solange dieser von dem Nutzer 105 betätigt wird. Damit wird sichergestellt, dass der Nutzer 105 das Geschehen aus nächster Nähe überwacht und den Einparkvorgang sofort durch Loslassen des Totmannschalters abbrechen kann. Während des ersten Zuges Z1 werden, wie zuvor beschrieben, Umgebungssensordaten SIG (siehe Fig. 4) empfangen, auf deren Basis der vorbestimmte Zustand des Fahrzeugs 100 ermittelt wird, sobald das Fahrzeug 100 die Endposition 101 nach dem ersten Zug Z1 erreicht hat.

Wenn der erste Zug Z1 erfolgreich durchgeführt wurde und der vorbestimmte Zustand ermittelt wird, wird die autonome Durchführung weitere Züge Z2 freigeschaltet. Beispielsweise kann die autonome Durchführung weiterer Züge Z2, nachdem dies freigeschaltet wurde, durch den Benutzer 105 bestätigt oder gestartet werden, indem dieser eine entsprechende Benutzereingabe vornimmt. Nach dem Start der autonomen Durchführung weiterer Züge Z2 des Einparkvorgangs kann sich der Nutzer 105 abwenden, das heißt, er kann sich entfernen und seinen Aufmerksamkeit 106 auf andere Dinge richten. Die Sicherheit der autonomen Durchführung der weiteren Züge Z2 ist einerseits durch das ermitteln des vorbestimmten Zustands gewährleistet, andererseits ist das Parkassistenzsystem 110 beispielsweise dazu eingerichtet, die autonome Durchführung jederzeit abzubrechen, insbesondere, wenn der vorbestimmte Zustand nicht mehr gegeben ist, und das Fahrzeug 100 in einen sicheren Zustand zu versetzen, beispielsweise indem eine Notbremsung durchgeführt wird.

Fig. 4 zeigt ein schematisches Blockschaltbild eines Ausführungsbeispiels für ein Parkassistenzsystem 110, das beispielsweise in dem Fahrzeug 100 der Fig. 1 - 3 verwendet werden kann. Das Parkassistenzsystem 110 umfasst eine Empfangseinheit 112 zum Empfangen von Umgebungssensordaten SIG von wenigstens einem Umgebungssensor 102, 104 (siehe Fig. 1) des Fahrzeugs 100 während eines ersten Zuges Z1 (siehe Fig. 2 oder 3) eines Einparkvorgangs des Fahrzeugs 100 auf einen Parallel-Parkplatz 122 (siehe Fig. 2 oder 3), eine Ermittlungseinheit 114 zum Ermitteln, ob das Fahrzeug nach Abschluss des ersten Zuges Z1 in einem vorbestimmten Zustand ist, und eine Veranlassungseinheit 116 zum Veranlassen einer autonomen Durchführung von weiteren Zügen Z2 (siehe Fig. 2 oder 3) des Einparkvorgangs in Abhängigkeit des ermittelten vorbestimmten Zustands.

Die jeweilige Einheit, beispielsweise die Empfangseinheit 112, die Ermittlungseinheit 114 und/oder die Veranlassungseinheit 116, kann hardwaretechnisch und/oder softwaretechnisch implementiert sein. Bei einer hardwaretechnischen Implementierung kann die jeweilige Einheit zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als ein Algorithmus, als Teil eines Programmcodes oder als ausführbares Objekt ausgebildet sein. Ferner kann jede der vorliegend genannten Einheiten auch als Teil eines übergeordneten Steuerungssystems des Fahrzeugs 100, wie beispielsweise einer zentralen elektronischen Steuereinrichtung und/oder einem Motorsteuergerät (ECU: Engine Control Unit), ausgebildet sein.

Fig. 5 zeigt ein schematische Blockdiagramm eines Ausführungsbeispiels eines Verfahrens zum Betreiben eines Parkassistenzsystems 110 für ein Fahrzeug 100 (siehe Fig. 1 - 3), beispielsweise des in der Fig. 4 dargestellten Parkassistenzsystems 110. In einem ersten Schritt S1 wird ein Einparkvorgang gestartet, um das Fahrzeug 100 auf einem Parallel-Parkplatz 122 (siehe Fig. 2 oder 3) zu parken. Der Schritt S1 umfasst beispielsweise das Aktivieren eines Einpark-Assistenzsystems durch den Nutzer 105 (siehe Fig. 3) des Fahrzeugs 100. In einem zweiten Schritt S2 wird ein erster Zug Z1 (siehe Fig. 2 oder 3) des Einparkvorgangs durchgeführt. Der Schritt S2 kann sowohl manuell als auch teil-autonom durchgeführt werden In einem dritten Schritt S3 werden Umgebungssensordaten SIG (siehe Fig. 4) von wenigstens einem Umgebungssensor 102, 104 (siehe Fig. 1) des Fahrzeugs 100 während des ersten Zuges Z1 empfangen. In einem vierten Schritt S4 wird ermittelt, ob sich das Fahrzeug 100 nach Abschluss des ersten Zuges Z1 in einem vorbestimmten Zustand befindet. Dies umfasst insbesondere das Überprüfen einer Anzahl von vorgegebenen Kriterien, wie beispielsweise anhand der Fig. 2 beschrieben. In einem fünften Schritt S5 wird eine autonome Durchführung weiterer Züge Z2 (siehe Fig. 2 oder 3) des Einparkvorgangs in Abhängigkeit des ermittelten vorbestimmten Zustands veranlasst.

### BEZUGSZEICHENLISTE

- 100: Fahrzeug
- 101: Zielposition
- 102: Umgebungssensor
- 104: Umgebungssensor
- 105: Nutzer
- 106: Aufmerksamkeit
- 110: Parkassistenzsystem
- 112: Empfangseinheit
- 114: Ermittlungseinheit
- 116: Veranlassungseinheit
- 120: Parkbereich
- 122: Parallel-Parkplatz
- 200: Objekt/Hindernis
- 210: Markierung
- 300: Umgebung

- S1: Verfahrensschritt
- S2: Verfahrensschritt
- S3: Verfahrensschritt
- S4: Verfahrensschritt
- S5: Verfahrensschritt
- SIG: Umgebungssensorsignal
- Z0: Zug
- Z1: erster Zug
- Z2: weiterer Zug

## Patentansprüche

1. Verfahren zum Betreiben eines Parkassistenzsystems (100) für ein Fahrzeug (100), das Verfahren umfassend:
a) Starten (S1) eines Einparkvorgangs, um das Fahrzeug (100) auf einem Parallel-Parkplatz (122) zu parken;
b) teil-autonomes Durchführen (S2) eines ersten Zuges (Z1) des Einparkvorgangs unter Überwachung des Fahrzeugs (100) durch einen Nutzer (105) und Empfangen eines Sensorsignals eines durch den Nutzer (105) des Fahrzeugs (100) bedienten Totmannschalters,
c) Empfangen (S3) von Umgebungssensordaten (SIG) von wenigstens einem Umgebungssensor (102, 104) des Fahrzeugs (100) während des ersten Zuges (Z1),
d) Ermitteln (S4), ob das Fahrzeug (100) nach Abschluss des ersten Zuges (Z1) in einem vorbestimmten Zustand ist, und
e) Veranlassen (S5) einer voll-autonomen Durchführung von weiteren Zügen (Z2) des Einparkvorgangs in Abhängigkeit des ermittelten vorbestimmten Zustands.

2. Verfahren nach Anspruch 1, **dadurch gekennzeichnet, dass** der Schritt a) umfasst:
Empfangen einer Nutzereingabe des Nutzers (105) des Fahrzeugs (100), und
Veranlassen einer Durchführung des Einparkvorgangs durch das Parkassistenzsystem (110).

3. Verfahren nach Anspruch 1 oder 2, **dadurch gekennzeichnet, dass** der Schritt b) ferner umfasst:
Empfangen eines für eine aktuelle Position des Nutzers (105) relativ zu dem Fahrzeug (100) indikativen Sensorsignals.

4. Verfahren nach einem der vorhergehenden Ansprüche, **dadurch gekennzeichnet, dass** der Schritt d) umfasst:
Ermitteln, ob sich das Fahrzeug (100) vollständig innerhalb einer als Parkbereich (120) des Parallel-Parkplatzes (122) gekennzeichneten Fläche befindet.

5. Verfahren nach einem der vorhergehenden Ansprüche, **dadurch gekennzeichnet, dass** der Schritt d) umfasst:
Ermitteln, ob auf dem Parallel-Parkplatz (122) keine beweglichen Hindernisse, insbesondere Personen, anwesend sind.

6. Verfahren nach einem der vorhergehenden Ansprüche, **dadurch gekennzeichnet, dass** der Schritt d) umfasst:
Ermitteln, ob der Parallel-Parkplatz (122) eine eindeutige Begrenzung aufweist.

7. Verfahren nach einem der vorhergehenden Ansprüche, **dadurch gekennzeichnet, dass** der Schritt d) umfasst:
Durchführen einer Fehlerabfrage aller Teilsysteme des Fahrzeugs (100) und/oder des Parkassistenzsystems (110), die an dem Schritt e) beteiligt sind.

8. Verfahren nach einem der vorhergehenden Ansprüche, **dadurch gekennzeichnet, dass** der Schritt d) umfasst:
Ermitteln einer Trajektorie umfassend die weiteren Züge (Z2) des Einparkvorgangs, und
Überprüfen, ob das Fahrzeug (100) bei dem autonomen Fahren entlang der ermittelten Trajektorie vollständig innerhalb einer als Parkbereich (120) des Parallel-Parkplatzes (122) gekennzeichneten Fläche bleibt.

9. Verfahren nach einem der vorhergehenden Ansprüche, **gekennzeichnet durch**:
Abbrechen des Schritts e), falls das Fahrzeug (100) den Parkbereich (120) des Parallel-Parkplatzes (122) zumindest teilweise verlässt, und
Ausgeben eines Hinweissignals an den Nutzer (105) des Fahrzeugs, dass der Einparkvorgang abgebrochen wurde.

10. Verfahren nach Anspruch 9, **dadurch gekennzeichnet, dass** das Abbrechen eine Notbremsung des Fahrzeugs (100) umfasst, um das Fahrzeug (100) in einen sicheren Zustand zu versetzen.

11. Computerprogrammprodukt, umfassend Befehle, die bei der Ausführung des Programms durch einen Computer diesen veranlassen, das Verfahren nach einem der Ansprüche 1 - 10 auszuführen.

12. Parkassistenzsystem (110) für ein Fahrzeug (100), umfassend:
eine Empfangseinheit (112) zum Empfangen von Umgebungssensordaten (SIG) von wenigstens einem Umgebungssensor (102, 104) des Fahrzeugs (100) während eines ersten teil-autonomen Zuges (Z1) eines Einparkvorgangs des Fahrzeugs (100) auf einen Parallel-Parkplatz (122) und zum Empfangen eines Sensorsignals eines durch den Nutzer (105) des Fahrzeugs (100) bedienten Totmannschalters,
eine Ermittlungseinheit (114) zum Ermitteln, ob das Fahrzeug (100) nach Abschluss des ersten teil-autonomen Zuges (Z1) in einem vorbestimmten Zustand ist, und
eine Veranlassungseinheit (116) zum Veranlassen einer voll-autonomen Durchführung von weiteren Zügen (Z2) des Einparkvorgangs in Abhängigkeit des ermittelten vorbestimmten Zustands.

13. Fahrzeug (100) mit wenigstens einem Umgebungssensor (102, 104) zum Erfassen und Ausgeben von Umgebungssensordaten (SIG), und mit einem Parkassistenzsystem (110) nach Anspruch 12.

## Claims

1. Method for operating a parking assistance system (100) for a vehicle (100), the method comprising:
a) Starting (S1) a parking process to park the vehicle (100) in a parallel parking space (122);
b) Semi-autonomously executing (S2) a first maneuver (Z1) of the parking process under supervision of the vehicle (100) by a user (105) and receiving a sensor signal from a deadman switch operated by the user (105) of the vehicle (100),
c) Receiving (S3) environmental sensor data (SIG) from at least one environmental sensor (102, 104) of the vehicle (100) during the first maneuver (Z1),
d) Determining (S4) whether the vehicle (100) is in a predetermined state after completion of the first maneuver (Z1), and
e) Initiating (S5) a fully autonomous execution of further maneuvers (Z2) of the parking process depending on the determined predetermined state.

2. Method according to claim 1, **characterized in that** step a) comprises: receiving a user input from the user (105) of the vehicle (100), and initiating an execution of the parking process by the parking assistance system (110).

3. Method according to claim 1 or 2, **characterized in that** step b) further comprises:
receiving a sensor signal indicative of a current position of the user (105) relative to the vehicle (100).

4. Method according to any of the preceding claims, **characterized in that** step d) comprises: determining whether the vehicle (100) is completely within an area designated as parking area (120) of the parallel parking space (122).

5. Method according to any of the preceding claims, **characterized in that** step d) comprises: determining whether no movable obstacles, in particular persons, are present in the parallel parking space (122).

6. Method according to any of the preceding claims, **characterized in that** step d) comprises: determining whether the parallel parking space (122) has a clear boundary.

7. Method according to any of the preceding claims, **characterized in that** step d) comprises: performing an error check of all subsystems of the vehicle (100) and/or the parking assistance system (110) that are involved in step e).

8. Method according to any of the preceding claims, **characterized in that** step d) comprises: determining a trajectory comprising the further maneuvers (Z2) of the parking process, and checking whether the vehicle (100) remains completely within an area designated as parking area (120) of the parallel parking space (122) when autonomously driving along the determined trajectory.

9. Method according to any of the preceding claims, **characterized by**: aborting step e) if the vehicle (100) leaves the parking area (120) of the parallel parking space (122) at least partially, and outputting a notification signal to the user (105) of the vehicle that the parking process has been aborted.

10. Method according to claim 9, **characterized in that** the aborting comprises an emergency braking of the vehicle (100) to bring the vehicle (100) into a safe state.

11. Computer program product comprising instructions which, when the program is executed by a computer, cause the computer to execute the method according to any of claims 1 - 10.

12. Parking assistance system (110) for a vehicle (100), comprising: a receiving unit (112) for receiving environmental sensor data (SIG) from at least one environmental sensor (102, 104) of the vehicle (100) during a first semi-autonomous maneuver (Z1) of a parking process of the vehicle (100) into a parallel parking space (122) and for receiving a sensor signal from a deadman switch operated by the user (105) of the vehicle (100), a determination unit (114) for determining whether the vehicle (100) is in a predetermined state after completion of the first semi-autonomous maneuver (Z1), and an initiation unit (116) for initiating a fully autonomous execution of further maneuvers (Z2) of the parking process depending on the determined predetermined state.

13. Vehicle (100) with at least one environmental sensor (102, 104) for detecting and outputting environmental sensor data (SIG), and with a parking assistance system (110) according to claim 12.

## Revendications

1. Procédé pour faire fonctionner un système d'assistance au stationnement (100) pour un véhicule (100), le procédé comprenant :
a) le démarrage (S1) d'une opération de stationnement pour garer le véhicule (100) sur une place de stationnement parallèle (122) ;
b) l'exécution semi-autonome (S2) d'un premier mouvement (Z1) de l'opération de stationnement sous la surveillance du véhicule (100) par un utilisateur (105) et la réception d'un signal de capteur d'un interrupteur homme-mort actionné par l'utilisateur (105) du véhicule (100),
c) la réception (S3) de données de capteur d'environnement (SIG) d'au moins un capteur d'environnement (102, 104) du véhicule (100) pendant le premier mouvement (Z1),
d) la détermination (S4) si le véhicule (100) est dans un état prédéterminé après l'achèvement du premier mouvement (Z1), et
e) l'initiation (S5) d'une exécution entièrement autonome de mouvements supplémentaires (Z2) de l'opération de stationnement en fonction de l'état prédéterminé déterminé.

2. Procédé selon la revendication 1, **caractérisé en ce que** l'étape a) comprend : la réception d'une entrée utilisateur de l'utilisateur (105) du véhicule (100), et l'initiation d'une exécution de l'opération de stationnement par le système d'assistance au stationnement (110).

3. Procédé selon la revendication 1 ou 2, **caractérisé en ce que** l'étape b) comprend en outre : la réception d'un signal de capteur indicatif d'une position actuelle de l'utilisateur (105) par rapport au véhicule (100).

4. Procédé selon l'une des revendications précédentes, **caractérisé en ce que** l'étape d) comprend : la détermination si le véhicule (100) se trouve entièrement à l'intérieur d'une zone désignée comme zone de stationnement (120) de la place de stationnement parallèle (122).

5. Procédé selon l'une des revendications précédentes, **caractérisé en ce que** l'étape d) comprend : la détermination s'il n'y a pas d'obstacles mobiles, en particulier de personnes, présents sur la place de stationnement parallèle (122).

6. Procédé selon l'une des revendications précédentes, **caractérisé en ce que** l'étape d) comprend : la détermination si la place de stationnement parallèle (122) présente une délimitation claire.

7. Procédé selon l'une des revendications précédentes, **caractérisé en ce que** l'étape d) comprend : la réalisation d'une vérification d'erreur de tous les sous-systèmes du véhicule (100) et/ou du système d'assistance au stationnement (110) qui sont impliqués dans l'étape e).

8. Procédé selon l'une des revendications précédentes, **caractérisé en ce que** l'étape d) comprend : la détermination d'une trajectoire comprenant les mouvements supplémentaires (Z2) de l'opération de stationnement, et la vérification si le véhicule (100) reste entièrement à l'intérieur d'une zone désignée comme zone de stationnement (120) de la place de stationnement parallèle (122) lors de la conduite autonome le long de la trajectoire déterminée.

9. Procédé selon l'une des revendications précédentes, **caractérisé par** : l'annulation de l'étape e) si le véhicule (100) quitte au moins partiellement la zone de stationnement (120) de la place de stationnement parallèle (122), et l'émission d'un signal d'avertissement à l'utilisateur (105) du véhicule indiquant que l'opération de stationnement a été annulée.

10. Procédé selon la revendication 9, **caractérisé en ce que** l'annulation comprend un freinage d'urgence du véhicule (100) pour mettre le véhicule (100) dans un état sûr.

11. Produit programme d'ordinateur comprenant des instructions qui, lors de l'exécution du programme par un ordinateur, amènent celui-ci à exécuter le procédé selon l'une des revendications 1 à 10.

12. Système d'assistance au stationnement (110) pour un véhicule (100), comprenant : une unité de réception (112) pour recevoir des données de capteur d'environnement (SIG) d'au moins un capteur d'environnement (102, 104) du véhicule (100) pendant un premier mouvement semi-autonome (Z1) d'une opération de stationnement du véhicule (100) sur une place de stationnement parallèle (122) et pour recevoir un signal de capteur d'un interrupteur homme-mort actionné par l'utilisateur (105) du véhicule (100), une unité de détermination (114) pour déterminer si le véhicule (100) est dans un état prédéterminé après l'achèvement du premier mouvement semi-autonome (Z1), et une unité d'initiation (116) pour initier une exécution entièrement autonome de mouvements supplémentaires (Z2) de l'opération de stationnement en fonction de l'état prédéterminé déterminé.

13. Véhicule (100) avec au moins un capteur d'environnement (102, 104) pour détecter et émettre des données de capteur d'environnement (SIG), et avec un système d'assistance au stationnement (110) selon la revendication 12.
